# EUROPEAN PATENT APPLICATION

(11) **EP 4 821 737 A1**
(43) Date of publication of application: **14.10.2026**
(21) Application number: 25170093.6
(22) Date of filing: 11.04.2025
(51) Int. Cl.: B60L 1/00, B60L 58/12, B60R 16/03

(54) **COMPUTER SYSTEM AND METHOD FOR ESTIMATING POWER CONSUMPTION IN A VEHICLE**

(71) Applicant: Volvo Truck Corporation, 405 08 Göteborg (SE)
(72) Inventor: Lundstedt, Björn, 443 39 Lerum (SE)
(74) Representative: Valea AB

(57) **Abstract**

The disclosure relates to a computer system (800) for estimating power consumption in vehicle (1), the vehicle (1) comprising a plurality of power consumers (3), the computer system (800) comprising processing circuitry (802) configured to:
• determine which of the plurality of power consumers (3) that are active;
• determine an expected consumption associated with power for each active power consumer (3); and to
• determine an estimated total power consumption for all active power consumers (3) by summing the expected consumption associated with power for each active power consumer (3).

## Description

### TECHNICAL FIELD

The disclosure relates generally to a computer system, a computer-implemented method, a vehicle, a computer program product and a non-transitory computer-readable storage medium. In particular aspects, the disclosure relates to estimating power consumption in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle comprises a power generator and an energy storage, i.e. a battery. Furthermore, the vehicle comprises or is connected to one, two or more power consumers. Understanding the power situation within the vehicle is important for several reasons. One of these reasons relates to power management and utilization. It is also valuable to investigate the factors contributing to the draining of the vehicle's energy storage

It is a need to at least mitigate or solve this issue.

### SUMMARY

According to a first aspect of the disclosure, a computer system for estimating power consumption in a vehicle is provided. The vehicle comprises a plurality of power consumers. The computer system comprising processing circuitry configured to:
- determine which of the plurality of power consumers that are active;
- determine an expected consumption associated with power for each active power consumer; and to
- determine an estimated total power consumption for all active power consumers by summing the expected consumption associated with power for each active power consumer.

The first aspect of the disclosure may seek to improve estimation of power consumption in a vehicle. A technical benefit may include that estimation of power consumption in the vehicle is improved.

In scenarios where local measurements of individual power consumers are not feasible. In many vehicle configurations, direct measurement of power consumption from each specific power consumer-such as lights, infotainment systems, or climate control units-may be complex or impractical due to for example space constraints or cost limitations. Instead, the computer system of this disclosure relies on theoretical values derived from the known specifications of each power consumer and their active/inactive status. By leveraging this approach, the system may effectively estimate the expected consumption associated with power for each active consumer, thereby providing a comprehensive overview of total power usage without the need for extensive sensor deployments.

Moreover, the computer system of this disclosure comprises a validation mechanism through the use of global power measurements, i.e. the estimated total power consumption for all active power consumers. By monitoring the overall power consumption from the vehicle's power generator, the computer system may be arranged to compare this aggregate measurement against the calculated total power consumption derived from the summed theoretical values of all active consumers, e.g. a sanity check, validation or verification check may be performed. This sanity check serves as an important verification step, ensuring that the estimation process aligns with the actual energy being drawn from the power source. Discrepancies between the expected total and the global measurement may provide insights into potential inefficiencies or malfunctions within the vehicle's power management system, allowing for timely corrective actions.

Overall, this dual approach not only enhances the accuracy of power consumption estimates but also contributes to the optimization of energy management strategies within the vehicle. By effectively utilizing theoretical models and global measurements, the computer system empowers vehicle operators to make informed decisions regarding energy consumption, potentially leading to improved fuel efficiency and extended battery life in electric vehicles.

Optionally in some examples, including in at least one preferred example, the processing circuitry may be further configured to:
- compare the estimated total power consumption with a maximum allowed total power consumption; and to
- based on a result of the comparison, determine whether or not to take an action associated with at least one of the active power consumers.

A technical benefit may include that estimation of power consumption in the vehicle is improved. When the result indicates that there is a difference, then this may be an indication of a malfunctioning active power consumer, an unauthorized modification of the active power consumer, overconsumption of power etc. The action that may be taken may be to mitigate or remove the cause of the malfunctioning active power consumer, an unauthorized modification of the active power consumer, overconsumption of power etc. The possibility to determine whether or not to take an action may reduce the time that the at least one active power consumer is malfunctioning, running after an unauthorized modification has been performed, reduce overconsumption of power etc.

Optionally in some examples, including in at least one preferred example, the processing circuitry may be further configured to:
- determine a priority ranking of each active power consumer, and
wherein the action may be determined to be taken for the active power consumer having lowest priority ranking.

A technical benefit may include that estimation of power consumption in the vehicle is improved. The action may comprise turning off non-critical or low critical power consumers, lower priority power consumers, while driving, before any system power decrease is noticeable, just to mention some examples.

Optionally in some examples, including in at least one preferred example, when the result of the comparison indicates no difference between the estimated total power consumption and the maximum allowed total power consumption or the difference fulfills at least one difference criterion, then it may be determined that no action should be taken for any active power consumer.

A technical benefit may include that estimation of power consumption in the vehicle is improved. When there is no difference or when the difference is fulfills at least one difference criterion, then this may be an indication of that the estimated total power consumption is substantially the same as the maximum allowed total power consumption. In other words, the estimation is correct, i.e. it reflects the real power consumption. The at least one difference criterion may be that the difference is below at least one difference threshold, or any other suitable way of evaluating the difference. Furthermore, when there is no difference or when the difference does not fulfill the at least one difference criterion, then this may be an indication of no malfunctioning active power consumer, no unauthorized modification of the active power consumer, no overconsumption of power etc. When the difference does not fulfill the at least one difference criterion, then the difference may for example be below at least one difference threshold.

Optionally in some examples, including in at least one preferred example, the processing circuitry may be further configured to:
- determine a state of charge of a battery providing power to the active power consumers; and to
- based on the state of charge, determine whether or not to allow that at least one of the active power consumers overconsumes power from the battery.

A technical benefit may include that that estimation of power consumption in the vehicle is improved. Depending on the state of charge of the battery, it may be acceptable that at least one of the active power consumers overconsumes power from the battery. Overconsuming may be that the at least one active power consumer consumes more than it is allowed to consume. This may be the case when the state of charge of the battery fulfills at least one charge criterion, for example above 50% state of charge, above 40% state of charge, just to mention some examples. The charge criterion may comprise for example that the charge is at or above at least one charge threshold or any other suitable way of evaluating the state of charge. Allowing the at least one active power consumer to overconsume power may provide flexibility and the possibility to adapt to various power consuming situations. Allowing overconsumption may improve power utilization, it may enhance the performance of the at least one active power consumer, etc. Overconsumption may be allowed without any warnings on a stand still vehicle, but if similar overconsumption is detected on a moving vehicle, for example in vehicles with electrical steering or braking systems, may render in at least a warning to the user.

If the state of charge does not fulfill the at least one charge criterion, then it may not be allowed for at least one of the active power consumers to overconsume power from the battery. Not fulfilling the charge criterion may comprise that a charge threshold is not reached or any other way of evaluating the state of charge. The denial of overconsumption may be because the power is prioritized to be used by other active power consumers, by other active power consumers having higher priority than the one that wants to overconsume, etc. This may ensure or improve even distribution of the available power, it may provide stability in the power delivery to the active power consumers etc. By denying overconsumption, the lifetime of the battery may be increased, safety may be improved in that voltage drop is prevented, overheating is prevented, the risk of fire hazards is reduced etc., it improves power stability in the vehicle.

Optionally in some examples, including in at least one preferred example, when the state of charge indicates that the battery is fully charged or charged so that it fulfills at least one charge criterion, then it may be determined that overconsumption is allowed.

A technical benefit may include that that estimation of power consumption in the vehicle is improved. Overconsuming may be that the at least one active power consumer consumes more than it is allowed to consume. This may be the case when the state of charge of the battery fulfills at least one charge criterion, for example above 50% state of charge, above 40% state of charge, just to mention some examples. The charge criterion may be that the state of charge is at or above at least one charge threshold or any other suitable way of evaluating the state of charge. Allowing the at least one active power consumer to overconsume power may provide flexibility and the possibility to adapt to various power consuming situations. Allowing overconsumption may improve power utilization, it may enhance the performance of the at least one active power consumer, etc.

Optionally in some examples, including in at least one preferred example, when the state of charge indicates that the battery is not fully charged or charged so that it does not fulfill at least one charge criterion, then it may be determined that overconsumption is not allowed.

A technical benefit may include that that estimation of power consumption in the vehicle is improved. If the state of charge does not fulfill the at least one charge criterion, then it may not be allowed for at least one of the active power consumers to overconsume power from the battery. Not fulfilling the at least one charge criterion may comprise for example that the state of charge is below at least one charge threshold or any other suitable way of evaluating the state of charge. The denial of overconsumption may be because the power is prioritized to be used by other active power consumers, by other active power consumers having higher priority than the one that wants to overconsume, etc. This may ensure or improve even distribution of the available power, it may provide stability in the power delivery to the active power consumers etc. By denying overconsumption, the lifetime of the battery may be increased, safety may be improved in that overheating is prevented, the risk of fire hazards is reduced etc., it improves energy efficiency and improves power stability in the vehicle.

Optionally in some examples, including in at least one preferred example, the processing circuitry may be further configured to:
- obtain information indicating a current measurement from a power generator of the vehicle;
- determine an actual total power consumption for all active power consumers in the vehicle based on the information indicating the current measurement;
- compare the actual total power consumption with the estimated total power consumption; and to
- based on a result of the comparison, determine whether or not at least one of the active power consumers is functioning correctly.

A technical benefit may include that that estimation of power consumption in the vehicle is improved. With the possibility to determine whether or not at least one of the active power consumers is function correctly, it may be possible to take necessary actions in case at least one of the active power consumers is not functioning correctly. This may reduce or mitigate the non-functioning to cause undesirable effects or damages to other power consumers and to other entities of the vehicle. Thus, safety is increased.

Optionally in some examples, including in at least one preferred example, when the result of the comparison indicates a difference between the actual total power consumption and the estimated total power consumption fulfills at least one difference criterion, then the processing circuitry may be configured to determine that at least one of the active power consumers are not functioning correctly.

A technical benefit may include that that estimation of power consumption in the vehicle is improved. With the possibility to determine whether or not at least one of the active power consumers is function correctly, it may be possible to take necessary actions in case at least one of the active power consumers is not functioning correctly. This may reduce or mitigate the non-functioning to cause undesirable effects or damage to other power consumers and to other entities of the vehicle. Thus, safety is increased.

Optionally in some examples, including in at least one preferred example, when the result of the comparison indicates no difference or a difference between the actual total power consumption and the estimated total power consumption that does not fulfils at least one difference criterion, then the processing circuitry may be configured to determine that the vehicle is to maintain normal operating mode and/or that none of the at least one active power consumers needs to be shut down.

A technical benefit may include that that estimation of power consumption in the vehicle is improved. Normal operating mode may comprise that the vehicle and the power consumers work without limitations. When it is determined, e.g. confirmed, that the vehicle may maintain normal operating mode and/or that none of the at least one active power consumer needs to be shut down, the reliability of the vehicle is improved since the vehicle will perform as expected. The safety is improved in that no uninspected events will occur when it is ensured that normal operating mode is maintained and/or when it is ensured that none of the at least one active power consumer needs to be shut down. This also improves the comfort of users operating the vehicle as he/she will not be faced with any unexpected events that may distract from the operation of the vehicle.

Optionally in some examples, including in at least one preferred example, the current measurement may be obtained from the power generator and a battery comprised in the vehicle.

A technical benefit may include that that estimation of power consumption in the vehicle is improved. The current measurement obtained from the power generator and the battery may be considered as reliable and realistic measurements. Consequently, the estimation of the power consumption is reliable and realistic.

Optionally in some examples, including in at least one preferred example, the expected consumption associated with power for each active power consumer may comprise a minimum expected consumption and a maximum expected consumption.

A technical benefit may include that that estimation of power consumption in the vehicle is improved. The minimum expected consumption may be a diagnostic check that the feature power consumer works, and the maximum expected consumption may be to secure system aspects, such as keeping the system voltage stable

According to a second aspect of the disclosure, a vehicle is provided. The vehicle comprises the computer system of any of the first aspect and a plurality of power consumers.

The second aspect of the disclosure may seek to improve estimation of power consumption in a vehicle. A technical benefit may include that estimation of power consumption in the vehicle is improved.

Technical benefits of the second aspect of the disclosure may correspond to the technical benefits of the first aspect of the disclosure. Further, all examples of the first aspect are applicable to and combinable with all examples of the second aspect, and vice versa.

According to a third aspect of the disclosure, a computer-implemented method for estimating power consumption in a vehicle is provided. The vehicle comprises a plurality of power consumers. The method comprising:
- determining, by a processing circuitry of a computer system, which of the plurality of power consumers that are active;
- determining, by the processing circuitry, an expected consumption associated with power for each active power consumer; and
- determining an estimated total power consumption for all active power consumers by summing the expected consumption associated with power for each active power consumer.

The third aspect of the disclosure may seek to improve estimation of power consumption in a vehicle. A technical benefit may include that estimation of power consumption in the vehicle is improved.

Technical benefits of the third aspect of the disclosure may correspond to the technical benefits of the first and second aspects of the disclosure. Further, all examples of the first and second aspects are applicable to and combinable with all examples of the third aspect, and vice versa.

According to a fourth aspect of the disclosure, a computer program product is provided. The computer program product comprises program code for performing, when executed by a processing circuitry, the method of the third aspect.

The fourth aspect of the disclosure may seek to improve estimation of power consumption in a vehicle. A technical benefit may include that estimation of power consumption in the vehicle is improved.

Technical benefits of the fourth aspect of the disclosure may correspond to the technical benefits of the first, second and third aspects of the disclosure. Further, all examples of the first, second and third aspects are applicable to and combinable with all examples of the fourth aspect, and vice versa.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The fifth aspect of the disclosure may seek to improve estimation of power consumption in a vehicle. A technical benefit may include that estimation of power consumption in the vehicle is improved.

Technical benefits of the fifth aspect of the disclosure may correspond to the technical benefits of the first, second, third and fourth aspects of the disclosure. Further, all examples of the first, second, third and fourth aspects are applicable to and combinable with all examples of the fifth aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1a** is an exemplary drawing illustrating a vehicle, according to an example.
**FIG. 1b** is an exemplary drawing illustrating a vehicle, according to an example.
**FIG. 2** is an exemplary flow chart illustrating a method, according to an example.
**FIG. 3** is an exemplary flow chart illustrating a method, according to an example.
**FIG. 4** is an exemplary flow chart illustrating a method, according to an example.
**FIG. 5** is an exemplary flow chart illustrating a method, according to an example.
**FIG. 6** is another view of **FIG. 1****,** according to an example.
**FIG. 7** is a flow chart of an exemplary method, according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure relates to in vehicle estimation of total power consumption. A vehicle comprises a power generator and an energy storage, i.e. a battery. Furthermore, the vehicle comprises or is connected to one, to or more power consumers. Understanding the power situation within the vehicle is important for several reasons. One of these reasons relates to power management and utilization. It is also valuable to investigate the factors contributing to the draining of the vehicle's energy storage. It is a need to at least mitigate or solve this issue.

The present disclosure relates to estimating the total electrical current consumption to be able to log the historical usage of energy consumption by sub systems or functions in a vehicle. This may be done by using the input from multiple ECUs that either measures or knows what is connected to them. Today, the total current out of the batteries can be measured by using a battery sensor with current sensing. However, this will not show what subsystem or function which consumes power in the vehicle.

In a vehicle comprising a power generator, a battery and a plurality of power consumers , the total consumption of the power consumers may be of interest to understand the power situation also without the battery sensing. The traceability of the power consumer's consumption is of interest for vehicle users what is causing the battery draining.

Power consumers such as for example ECUs, subsystems, vehicle functions may have the possibility to integrate its current consumption from ampere to Ah. The of them may be arranged to report their actual current consumption and the used energy in Ah. The Ah counter may be possible to reset at request or by any other suitable trigger. Using the ECU as an example of the power consumer. The ECU may report A or Ah at request or before the ECU enters sleep mode. As vehicles are built towards strict drawings it is possible to program the ECU in a way that the consumption caused by its actions can be summarized. If the vehicle have power consumers that are not possible to measure or estimate, the total current calculation will be a minimum value but the actual consumption can be higher.

More advanced power management functionality may be achieved with and without a battery sensor since more information about power consumption will be available. With knowledge about power consumption, it may be possible to adapt to balance usage towards time needed on battery power.

With the preset disclosure, it may be possible to dimension the power generation of the vehicle smaller then that it may manage 'all on'. The vehicle's power generation may weaken over time, or be faulty or overheated etc., and it may be possible to add power consumers, that may then overload the vehicle.

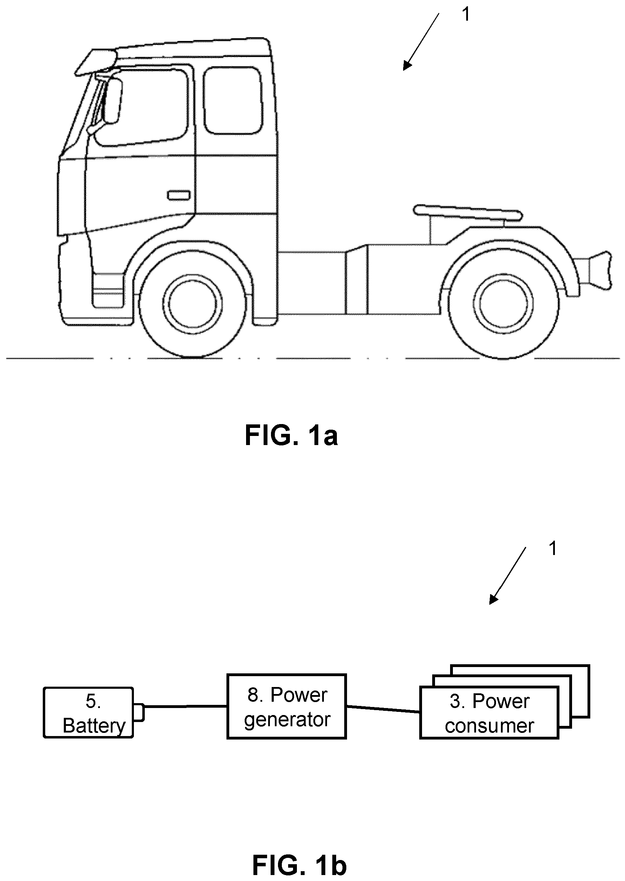

**FIG. 1a** is an exemplary drawing illustrating a vehicle **1,** according to an example. The vehicle **1** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **1** may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 1 may be operated by a user (not shown) and/or be at least partly automatically driven, i.e., it may be a vehicle comprising autonomous driving capabilities. The vehicle 1 may be a fully electric vehicle or a hybrid vehicle or it may be a vehicle only driven by a combustion engine. The vehicle **1** may comprise one or more electric motors/generators and/or an internal combustion engine (not shown) for driving the vehicle **1.**

The term vehicle will be used herein when referring to any of the above types of vehicles.

**FIG. 1b** is an exemplary drawing illustrating the vehicle **1,** according to an example. **FIG. 1b** illustrates that the vehicle **1** comprises or is connected to a plurality of power consumers **3.** The vehicle **1** may comprise a battery **5** and a power generator **8.**

The term plurality means that the vehicle **1** comprises *n* power consumers, where n is a positive integer larger than one. Each power consumer **3** may be an active power consumer or an inactive power consumer. In other words, each power consumer **3** may be either in an active state or an inactive state. When the power consumer **3** is active, it is on, it is running, it is enabled, it may consumer power, it may perform a task, etc. When the power consumer **3** is inactive, it is off, it is not running, it is in sleep mode, it is disabled, it does not comprise power, it does not perform a task etc.

Below is a table showing an example with 8 power consumers **3** in total in the vehicle **1,** and where some of them are active and others are inactive:

**Table 1 Power consumers**

| **Available/All power consumers** | **Active power consumers** | **Inactive power consumers** |
|---|---|---|
| Power consumer 1 | Power consumer 1 | |
| Power consumer 2 | Power consumer 2 | |
| Power consumer 3 | | Power consumer 3 |
| Power consumer 4 | Power consumer 4 | |
| Power consumer 5 | | Power consumer 5 |
| Power consumer 6 | Power consumer 6 | |
| Power consumer 7 | Power consumer 7 | |
| Power consumer 8 | | Power consumer 8 |

The power consumer **3** may be referred to as an electric load, an auxiliary load, an addon device. The power consumer **3** is arranged to consume power from the battery **5.** The power consumer **3** may be a Direct Current (DC) or Alternating Current (AC) power consumer.

The power consumer **3** may be any suitable power consumer in the vehicle **1** and arranged to be powered by the battery **5.** The power consumer **3** may be for example, lights, infotainment system, sensors, door locks, Electronic Control Units (ECU), seat heating, seat adjustment system, camera, airbag, tire pressure monitoring system, Heating, Ventilation and Air Conditioning (HVAC) system, fan, telematics systems, navigation system.

The battery **5** is arranged to store electrical energy, i.e. DC. The battery **5** may be referred to as an energy storage, a power supply etc. The electrical energy stored in the battery **5** may be converted into AC to power the power consumers **3,** or it may not be necessary to perform any conversion, i.e. the power consumer **3** is powered with DC. The need for conversion into AC is dependent on the type of the power consumer **3.** The battery **5** is a low voltage battery, where low voltage refers to a voltage that does not fulfill a voltage criterion. The voltage criterion may be that the voltage is below a voltage threshold. The low voltage battery may be a 12V or a 24V battery, just to mention some examples.

The battery **5,** also referred to as a battery pack, comprises any suitable number of battery cells. The battery **5** may be of any suitable type, for example lithium-ion battery

The power generator **8** is arranged to power the plurality of power consumers **3,** i.e. it provides power to the power consumers **3.** The power source for the power generator **8** is a combustion engine. The power generator **8** may be arranged to charge the battery **5** while the engine of the vehicle 1 is running. The power generator **8** may ensure that the battery **5** comprises a sufficient charge in order to power the power consumer **3.** The power generator **8** may provide additional power to the power consumer **3** when the battery **5** is experiencing heavy demand or when it is being charged. The power generator **8** may be arranged to perform tasks such as load balancing, it may be a backup power source in the event of battery failure or depletion, just to mention some examples.

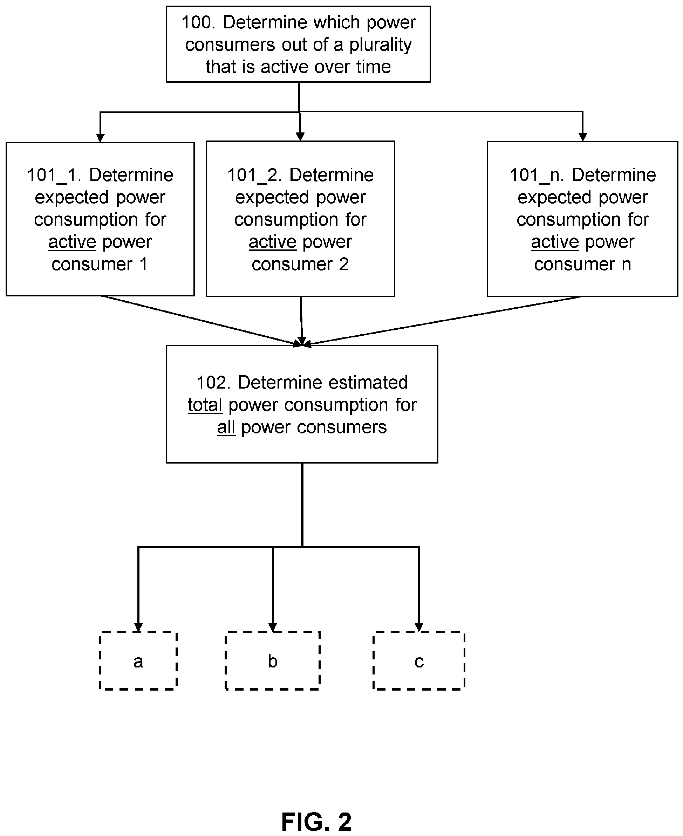

**FIG. 2** is an exemplary flow chart illustrating a method, according to an example. The method may be performed by a computer system **800** or a processing circuitry **802** comprised in the computer system **800.** The computer system **800** may be located onboard the vehicle **1,** or offboard the vehicle **1,** or partly located onboard and partly located offboard the vehicle **1.** When it is partly located onboard and partly located offboard the vehicle **1,** a first part of the computer system **800** may be located onboard the vehicle **1** and a second part of the computer system **800** may be located offboard the vehicle **1.**

The method comprises at least one of the following steps, which steps may be performed in any suitable order than described below:

### Step 100

It is determined which power consumers **3** out of a plurality that is active, for example at at least one time instance or over a period of time. The plurality of power consumers **3** are comprised in or connected to the vehicle **1.** As mentioned above, when a power consumer **3** is active, it is on, it is running, it is enabled, it may consumer power, it may perform a task, etc. When a power consumer **3** is inactive, it is off, it is not running, it is in sleep mode, it is disabled, it does not comprise power, it does not perform a task etc. As also mentioned above, the term plurality means that there is n power consumers, where n is a positive integer larger than one.

Any suitable method may be used for determining that a power consumer **3** is active. At least one of the computer system **800** and the processing circuitry **802** may monitor the status of all power consumers **3,** i.e. the operational status of the power consumers **3.** The method for determining the active operational status may depend on a variety of factors, for example the type of power consumer **3,** the required accuracy, etc. The active operational state may be determined based on at least one of: a current measurement, a voltage measurement, a power measurement, a relay and contact measurement, a temperature measurement, sensor measurement, control system measurement, just to mention some example.

For example, when a power consumer **3** changes its status from inactive to active, the power consumer **3** or a sensor associated with the power consumer **3** may provide an indication of the active status to at least one of the computer system **800** and the processing circuitry **802.** The indication may be ohmic, an ampere value at 24V or more complex comprising variables as time, rpm, temperature or similar.

Considering an example where the power consumer **3** is a fan. The fan may be turned activated using an on-off switch. When the switch is turned on, this may trigger sending an input signal to the ECU. As a result of the input signal, the ECU turns on a pin and consequently the fan is activated and starts working. The change of status of the pin from off to on is an example of how to determine that a power consumer **3** is active.

The number of active power consumers **3** may be lower than the total number of power consumers **3** in the vehicle **3** or it may be the same as the total number of power consumers 3 in the vehicle **3.** When the number of active power consumers **3** are lower than the total number of power consumers **3** in the vehicle **3,** then this may mean that the vehicle **1** comprises both active power consumers **3** and inactive power consumers **3.**

The number of active power consumers **3** may be lower, the same or higher than the number of inactive power consumers **3.**

The power consumers **3** are the ones that are powered by the battery **5.**

The time may comprise at least one time period or at least one time instance. The time may be in the range of seconds.

Active power consumers **3** may be determined based on the logic of the controllers controlling the energy consumers **3** and that the expected consumption that will be determined in step 101 is thus based on theoretical values or tabulated values for each active energy consumer **3.** The expected consumption is associated with power. The expected consumption may comprise at least one of: an expected power consumption and an expected energy consumption.

Before step 100, another step may be performed in which power consumers **3** are activated and only power consumers **3** in which they collectively expect to consume a certain power within a given power budget may be activated. The method described herein will ensure this is correct.

### Step 101_1, 101_2,..., 101_n

The expected consumption associated with power for each active power consumer **3** is determined, i.e. the ones that were identified in step **100.** The letter *n* in the numbering of the steps refers to the total *n* number of active power consumers **3** comprised in or connected to the vehicle **1.** This step may be referred to as determining a predicted or estimated power consumption for each active power consumer **3.** The expected consumption may be what each active power consumer **3** is expected or estimated to consume at any time or time period, past, present or future, and in terms of at least one of: power and energy.

The expected consumption may be determined using any suitable method. For example, the expected consumption may be determined based on data from the manufacturer data of the power consumer **3,** it may be determined using any suitable calculating method, it may be determined based on sensor measurements associated with the power consumer **3** etc.

The expected consumption may be determined based on information about the expected consumption obtained from the design specification or manufacturer data of the respective power consumer **3.**

Considering an example where the power consumer **3** is a fan: From the manufacturer data of the fan, it is known that the fan is intended to run with x rpm when it is turned on, i.e. activated. The expected/estimated consumption associated with power for an active fan may therefore be determined using x rpm as input. Note that additional parameters may be used as input for determining the expected/estimated consumption, in addition to the x rpm.

Considering another example where the power consumer **3** is the seat heating: From the manufacturer data of the seat heating, it may be known that the seat heating is intended to have a seat temperature of x degrees Celsius when activated. The expected/estimated consumption for the seat heating may therefore be determined using x degree Celsius as input. Note that additional parameters may be used as input for determining the expected/estimated consumption, in addition to the x degree Celsius. The seat heating may have a plurality of power states, and the power states may be another example of input for determining the expected/estimated consumption associated with power.

The expected power consumption associated with power that is determined may comprise a tolerance. The expected energy consumption may comprise a maximum value and a minimum value.

### Step 102

The estimated total power consumption for all active power consumers **3** is determined. This may be done by summing up the expected consumption associated with power for each active power consumer **3** that was determined in step **101.** The estimated total power consumption may be referred to as the expected total consumption associated with power for all active power consumers **3.** Since the inactive power consumers **3** do not consume any power, they are not included in the estimation. The estimated total power consumption may be what all active power consumer **3** is estimated or expected to consume together at any time or time period, past, present or future.

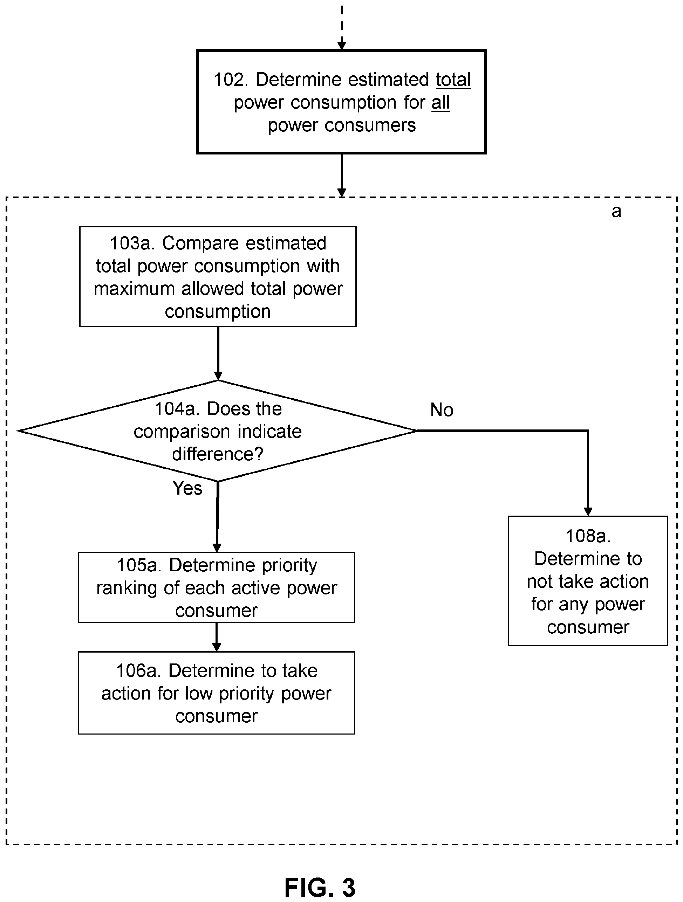

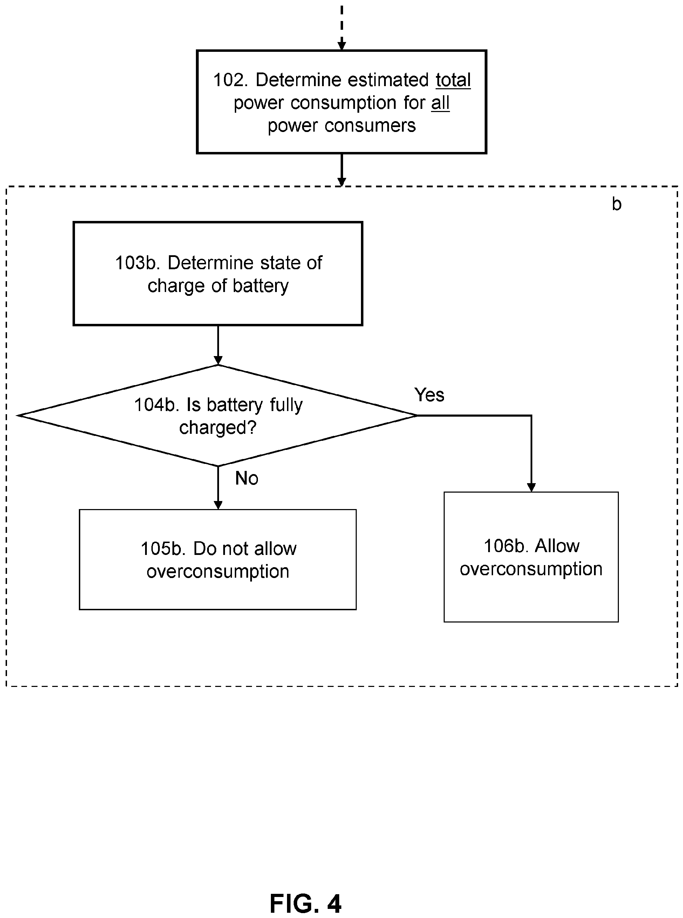

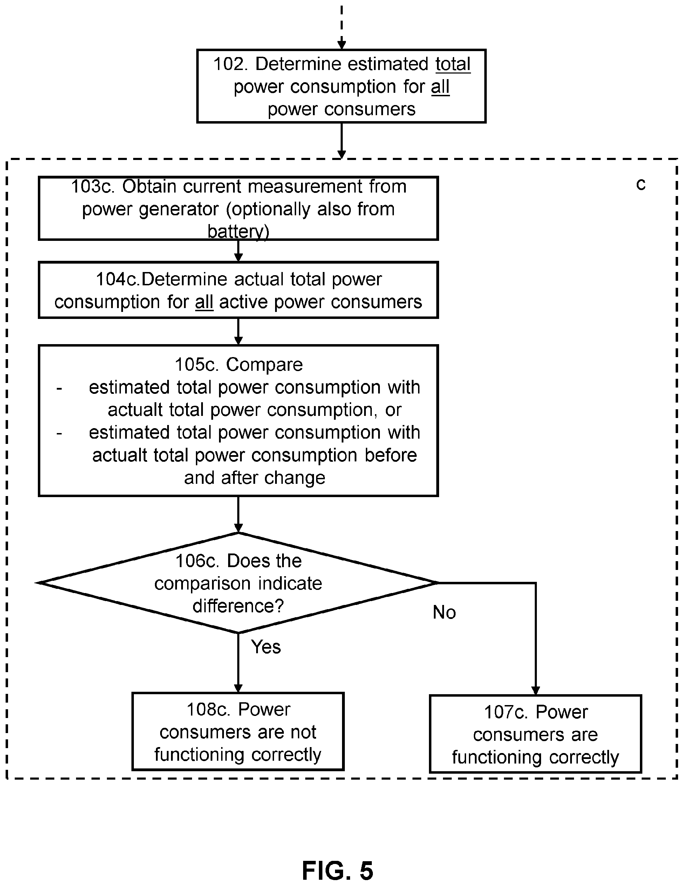

After step **102** has been performed, the method may proceed to one, two or three of alternatives a, b and c. Alternative a is illustrated in **FIG. 3****,** alternative b is illustrated in **FIG. 4** and alternative c is illustrated in **FIG. 5****.** The following may take place:

**Table 2 - Alternatives**

| **Alternative performed** | **Alternative not performed** |
|---|---|
| a | b, c |
| b | a, c |
| c | a, b |
| a, c | b |
| a, b | c |
| b, c | a |
| a, b, c | - |

When two or more alternatives are performed, then they may be performed in any suitable order or in parallel.

**FIG. 3** is an exemplary flow chart illustrating a method, according to an example. **FIG. 3** illustrates alternative a. The steps illustrated in **FIG. 3** may be performed after the steps illustrated in **FIG. 2** has been performed. The method in **FIG. 3** comprises at least one of the following steps, which steps may be performed in any suitable order than described below:

### Step 103a

The estimated total power consumption for all power consumers from step **102** may be compared with a maximum allowed total power consumption. The maximum allowed total power consumption may be predetermined, it may be a static value, it may be a dynamic value, it may be obtained from for example an offboard unit, from user input etc.

The maximum allowed power consumption may correspond to an adaptive value, an adaptive threshold value, an adaptive criterion. The maximum allowed power consumption may be, for example the maximum allowed power consumption for vehicle 1 in total, it may be a maximum allowed power consumption for a common fuse, it may be a maximum allowed power consumption for a certain power generator **8,** just to mention some examples.

Information indicating a result of the comparison may be provided to a user interface which may be accessible by a user, for example the user of the vehicle **1.**

### Step 104a

It is checked whether or not the result of the comparison in step **103a** indicates a difference between estimated total power consumption and a maximum allowed total power consumption, or if a difference fulfills at least one a difference criterion. The difference criterion may be a difference threshold or any other criterion suitable for the comparison evaluation. The difference criterion may be that the difference is at or above a difference threshold. When the result indicates a difference or a difference fulfilling the at least one difference criterion, then the method may proceed to step **105a,** as indicated with yes in **FIG. 3****.** When the result indicates no difference or a difference that does not fulfill the at least one difference criterion, then the method may proceed to step **107a,** as with no in **FIG. 3****.** When the at least one difference criterion is not fulfilled, then the difference may be below a difference threshold.

The estimated total power consumption may be lower than the maximum allowed total power consumption, as determined based on actual status of the power generator **8,** for example limitations due to temperature or overheating or failure. For example, one out of two power generators **8** may be faulty. That the estimated total power consumption is lower than the maximum allowed total power consumption may be described as the maximum allowed total power consumption being reduced from it's nominal maximum value.

The estimated total power consumption may be lower than the maximum allowed total power consumption, when the battery **5** have reduced capability to support peak loads. Very low state-of-charge or full Open Circuit, e.g. battery disconnected.

The maximum allowed total power consumption may be reduced to secure a safe margin for rapid power increase, especially a power reserve for electrical steering of the vehicle **1.**

### Step 105a

This step may be performed when the result of the comparison in steps **103a** and **104a** indicates a difference or a difference that fulfills at least one difference condition. The difference condition may comprise a difference threshold or any other suitable way of evaluating the difference. The difference criterion may be fulfilled for example when the difference is at or above a difference threshold. A priority ranking for each active power consumer may be determined. The priority ranking may be in relation to how critical the power consumer **3** is for functioning of the vehicle **1,** it may be related to which group the power consumer belongs to where certain groups such as power consumers **3** related to safety functions of the vehicle **1** have higher priority than power consumers **3** related to entertainment functions. The priority ranking may be dynamically determined, or it may be a predetermined priority ranking. The priority ranking may be determined by, for example a computer system, it may be inputted to the computer system by the user, it may be downloaded on request or periodically from another entity etc.

### Step 106a

It may be determined to take an action for the low priority power consumers **3.** The action taken may be for example to deactivate the low priority power consumer **3,** it may be to put the low priority power consumer **3** in idle mode, it may be to pause power delivery to the low priority power consumer **3,** etc., just to mention some examples. The action may comprise generating error code, indicating an error in the system or a subsystem, it may be to deactivate at least one power consumer **3,** it may be to trigger a current limitation, e.g. setting the system in a reduced mode in which lower current is consumed.

The action may be an automated action.

### Step 107a

This step may be performed when the result in steps **103a** and **104a** indicates no difference or a difference that does not fulfill the at least one difference condition. It may be determined to take no action for any of the power consumers **3.** In other words, all power consumers **3** proceed with their current operation. Not fulfilling the at least one difference condition may comprise for example that the difference is below a difference threshold or any other suitable way of evaluating the difference.

**FIG. 4** is an exemplary flow chart illustrating a method, according to an example. **FIG. 4** illustrates alternative b. The steps illustrated in **FIG. 4** may be performed after the steps illustrated in **FIG. 2** has been performed. The method in **FIG. 4** comprises at least one of the following steps, which steps may be performed in any suitable order than described below:

### Step 103b

The State of Charge (SoC) of the battery may be determined. The SoC may be the current SoC. The SoC may be determined by obtaining information about the SoC from a SoC sensor comprised in or associated with the battery **5.**

### Step 104b

Based on the information of the SoC, it may be checked whether or not the battery is fully charged or charged at or above a charging level. When the battery **5** is not fully charged or charged below the charging level, the method may proceed to step **105b,** as indicated with no in **FIG. 4****.** When the battery **5** is fully charged or charged at or above the charging level, the method may proceed to step **106b,** as indicated with yes in **FIG. 4****.**

### Step 105b

This step may be performed when the battery **5** is not fully charged or charged below the charging level. Overconsumption of power may be determined to not be allowed. The denial of overconsumption may be for at least one of the active power consumers **3.**

### Step 106b

This step may be performed when the battery **5** is fully charged or charged at or above the charging level. Overconsumption of power may be determined to be allowed. The overconsumption may be for at least one of the active power consumers **3.** Overconsumption of power may comprise that more power is consumed than the power provided to the battery during at least one of driving and charging. The overconsumption may be allowed for a limited time. The overconsumption may not always be allowed. For certain systems e.g. classic ICE vehicles more overconsumption is typically allowed. If there is a high Automotive Safety Integrity Level (ASIL), the requirements on power from battery **5** may be higher and thus overconsumption may not be allowed to the same extent. For e.g. critical low power consumers **3,** then overconsumption may not be as accepted and higher SOC in batteries are required. A critical low power consumer may be for example an electrical steering servo, a computer for an autonomous vehicle etc.

**FIG. 5** is an exemplary flow chart illustrating a method, according to an example. **FIG. 5** illustrates alternative c. The steps illustrated in **FIG. 5** may be performed after the steps illustrated in **FIG. 2** has been performed. The method in **FIG. 5** comprises at least one of the following steps, which steps may be performed in any suitable order than described below:

### Step 103c

A current measurement from the power generator **8** may be obtained. The current measurement may be obtained from a current sensor comprised in or associated with the power generator **8.** Another current measurement may be obtained from the battery **5.**

### Step 104c

The actual total power consumption for all active power consumers may be determined. The actual total power consumption for all active power consumers **3** may be determined based on at least one of the current measurements from step **103c.**

### Step 105c

One or both of the following comparisons may be performed:
- Comparing estimated total power consumption from step **102** with the actual total power consumption from step **104c.**

### Step 106c

It may be checked whether or not the result of the comparison in step **105c** indicates a difference or a difference that fulfills at least one difference criterion. If the result indicates a difference or a difference that fulfills at least one difference criterion, then the method may proceed to step **108c,** as indicated with yes in **FIG. 5****.** When the result does not indicate a difference or a difference that does not fulfill the at least one difference criterion, then the method may proceed to step **107c,** as indicated with no in **FIG. 5****.**

### Step 107c

When the result does not indicate a difference or a difference that does not fulfill the at least one difference criterion, it may be determined that at least one or all of the power consumers are functioning correctly.

### Step 108c

When the result indicates a difference or a difference that fulfill the at least one difference criterion, it may be determined that at least one or all of the power consumers are not functioning correctly. Accordingly, at least one action may be determined to be triggered and performed. The at least one action may be fault detection, replacement of the power consumer **3,** deactivation of the power consumer **3,** repair of the power consumer **3,** etc., just to mention some examples.

The action may comprise generating error code, indicating an error in the system or a subsystem, it may be to deactivate at least one power consumer **3,** it may be to trigger a current limitation, e.g. setting the system in a reduced mode in which lower current is consumed. The action may be an automated action.

Below is an overview of some of the parameters described herein:

**Table 3 - parameters**

| **Parameter** | **Explanation** | |
|---|---|---|
| Expected consumption associated with power | | - May be expected power consumption or expected energy consumption |
| | | - For each active power consumer |
| | | - May comprise a minimum expected consumption and a maximum expected consumption |
| | | - For at least one time instance or a period of time |
| | | - Theoretical value or measured value |
| | | - May be a mean value |
| | | - A or WA, W, Wh, kWh or other unit representing the power, current or energy consumption may be used. |
| Estimated total power consumption | | - Estimated total power consumption = ∑ (expected consumption associated with power for active power consumers 1, 2, 3,...n) |
| | | - For all active power consumers |
| | | - For at least one time instance or a period of time or an average |
| | | - Theoretical value |
| | | - Wh or Kwh → or A, W as averages. |
| Current measurement | | - Actual flow of electric current from power generator in vehicle |
| | | - Optionally a measurement from battery |
| | | - Actual/real measurement |
| | | - For at least one time instance or a period of time |
| | | - Ampere |
| Actual total power consumption | | - For all active power consumers |
| | | - Based on current measurement |
| | | - Amount of power provided to all active energy consumers from power generator and/or battery |
| | | - Actual/real value |
| | | - For at least one time instance or a period of time |
| | | - Wh or Kwh |
| Maximum allowed total power consumption | | - For all active power consumers |
| | | - Predetermined value or dynamic value |

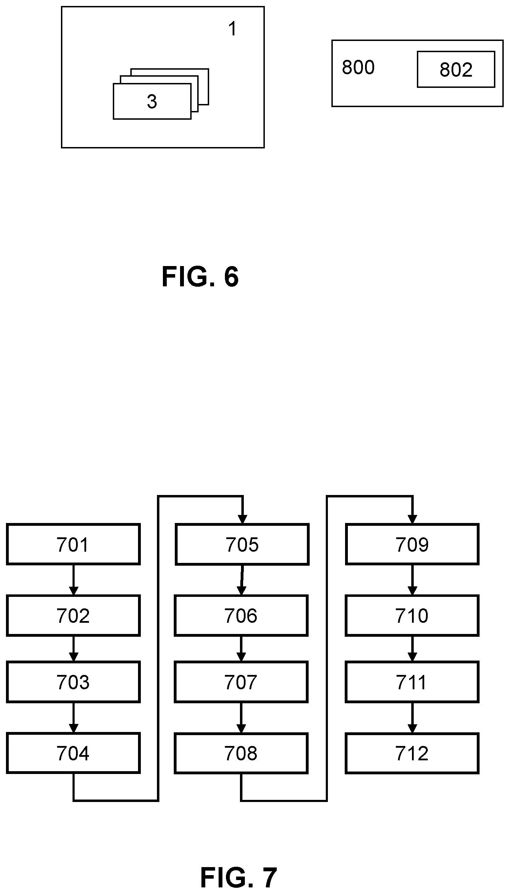

**FIG. 6** is another view of **FIG. 1****,** according to an example. **FIG. 6** illustrates a vehicle 1 comprising a plurality of power consumers **3.**

The vehicle **1** comprises a computer system **800.** The computer system **800** may be completely comprised in the vehicle **1,** or a first part of the computer system **800** is located onboard the vehicle **100** and a second part of the computer system **800** is located offboard the vehicle **1,** e.g. in a location remote from the vehicle **1,** or the whole computer system **800** may be located offboard the vehicle **1.** When the computer system **800** is at least partly located offboard the vehicle **1,** the offboard located computer system **800** is arranged to be connected to the vehicle **1.**

The computer system **800** may comprise a processing circuitry **802,** or the computer system **800** may be arranged to be connected to a processing circuitry **802.**

The processing circuitry **802** is configured to determine which of the plurality of power consumers **3** that are active, for example at at least one time instance or over a period of time.

The processing circuitry **802** is configured to determine an expected consumption associated with power for each active power consumer **3.** The expected consumption may comprise at least one of: an expected power consumption and an expected energy consumption.

The expected consumption for each active power consumer **3** may comprise a minimum expected consumption and a maximum expected consumption.

The processing circuitry **802** is configured to determine an estimated total power consumption for all active power consumers **3** by summing the expected consumption associated with power for each active power consumer **3.**

The processing circuitry **802** may be configured to compare the estimated total power consumption with a maximum allowed total power consumption.

The processing circuitry **802** may be configured to, based on a result of the comparison, determine whether or not to take an action associated with at least one of the active power consumers **3.**

The processing circuitry **802** may be configured to determine a priority ranking of each active power consumer **3.** The action may be determined to be taken for the active power consumer **3** having lowest priority ranking.

When the result of the comparison indicates no difference between the estimated total power consumption and the maximum allowed total power consumption or the difference does not fulfill at least one difference criterion, then it may be determined that no action **107a** should be taken for any active power consumer **3.**

The action may comprise for example to deactivate the power consumer **3,** to delay power delivery to the power consumer **3,** to reduce power delivery to the power consumer **3,** to perform error checking, just to mention some examples. The action may comprise generating error code, indicating an error in the system or a subsystem, it may be to deactivate at least one power consumer **3,** it may be to trigger a current limitation, e.g. setting the system in a reduced mode in which lower current is consumed. The action may be an automated action.

The processing circuitry **802** may be configured to determine a state of charge of a battery **5** providing power to the active power consumers **3.**

The processing circuitry **802** may be configured to, based on the state of charge, determine whether or not to allow that at least one of the active power consumers **3** overconsumes power from the battery **5.**

When the state of charge indicates that the battery **5** is charged so that it fulfills at least one charge criterion, then it may be determined that overconsumption is allowed **106b.** The charge criterion may be for example that the battery is fully charged, that the battery is charged to a level at or above a charge threshold etc.

When the state of charge indicates that the battery **5** is charged so that it does not fulfil at least one charge criterion, then it may be determined that overconsumption is not allowed **105b.** The charge criterion is not fulfilled for example when the battery **5** is not fully charged or charged to a level below a charge threshold.

The processing circuitry **802** may be configured to obtain information indicating a current measurement from a power generator **8** of the vehicle **1.**

The processing circuitry **802** may be configured to determine an actual total power consumption for all active power consumers **3** in the vehicle **1** based on the information indicating the current measurement.

The current measurement may be obtained from at least one of; the power generator **8** and a battery **5** comprised in the vehicle **1.**

The processing circuitry **802** may be configured to compare the actual total power consumption with the estimated total power consumption.

The processing circuitry **802** may be configured to, based on a result of the comparison, determine whether or not at least one of the active power consumers **3** is functioning correctly.

When the result of the comparison indicates a difference between the actual total power consumption and the estimated total power consumption fulfills at least one difference criterion, then the processing circuitry **802** may be configured to determine that at least one of the active power consumers **3** are not functioning correctly **108c.**

When the result of the comparison indicates no difference or a difference between the actual total power consumption and the estimated total power consumption does not fulfil at least one difference criterion, then the processing circuitry **802** may be configured to determine that the vehicle **1** is to maintain normal operating mode and/or that none of the at least one active power consumer **3** needs to be shut down.

**FIG.** 7 is a flow chart of a method for estimating power consumption in a vehicle **1 ,** according to an example. The method comprises at least one of the following steps, which steps may be performed in any suitable order than described below:

Step **701:** This step may correspond to step **100** in **FIG. 2****.** The processing circuitry **802** of the computer system **800** determines which of the plurality of power consumers **3** that are active, for example at at least one time instance or over a period of time.

Any suitable method may be used for determining that a power consumer **3** is active. At least one of the computer system **800** and the processing circuitry **802** may monitor the status of all power consumers **3,** i.e. the operational status of the power consumers **3.** The method for determining the active operational status may depend on a variety of factors, for example the type of power consumer **3,** the required accuracy, etc. The active operational state may be determined based on at least one of: a current measurement, a voltage measurement, a power measurement, a relay and contact measurement, a temperature measurement, sensor measurement, control system measurement, just to mention some example.

For example, when a power consumer **3** changes its status from inactive to active, the power consumer **3** or a sensor associated with the power consumer **3** may provide an indication of the active status to at least one of the computer system **800** and the processing circuitry **802.** The indication may be ohmic, an ampere value at 24V or more complex comprising variables as time, rpm, temperature or similar.

Considering an example where the power consumer **3** is a fan. The fan may be turned activated using an on-off switch. When the switch is turned on, this may trigger sending an input signal to the ECU. As a result of the input signal, the ECU turns on a pin and consequently the fan is activated and starts working. The change of status of the pin from off to on is an example of how to determine that a power consumer **3** is active.

Active power consumers **3** may be determined based on the logic of the controllers controlling the energy consumers **3** and that the expected consumption associated with power that will be determined in step 101 is thus based on theoretical values or tabulated values for each active energy consumer **3.**

Before step **701,** another step may be performed in which power consumers **3** are activated and only power consumers **3** in which they collectively expect to consume a certain power within a given power budget may be activated. The method described herein will ensure this is correct.

The expected consumption associated with power that is determined may comprise a tolerance. The expected consumption may comprise a maximum value and a minimum value.

Step **702:** This step may correspond to steps **101_1,...101_n** in **FIG. 2****.** The processing circuitry **802** determines an expected consumption associated with power for each active power consumer **3.** The expected consumption for each active power consumer **3** may be for at least one time instance, a period of time, it may be an average value, a mean value, just to mention some examples. The expected consumption is associated with power. The expected consumption may comprise at least one of: an expected power consumption and an expected energy consumption.

The expected consumption for each active power consumer **3** may comprise a minimum expected consumption and a maximum expected consumption.

The expected consumption may be determined using any suitable method. For example, the expected consumption may be determined based on data from the manufacturer data of the power consumer **3,** it may be determined using any suitable calculating method, it may be determined based on sensor measurements associated with the power consumer **3** etc.

The expected consumption may be determined based on information about the expected consumption obtained from the design specification or manufacturer data of the respective power consumer **3.**

Considering an example where the power consumer **3** is a fan: From the manufacturer data of the fan, it is known that the fan is intended to run with x rpm when it is turned on, i.e. activated. The expected/estimated consumption for an active fan may therefore be determined using x rpm as input. Note that additional parameters may be used as input for determining the expected/estimated consumption, in addition to the x rpm.

Considering another example where the power consumer **3** is the seat heating: From the manufacturer data of the seat heating, it may be known that the seat heating is intended to have a seat temperature of x degrees Celsius when activated. The expected/estimated consumption for the seat heating may therefore be determined using x degree Celsius as input. Note that additional parameters may be used as input for determining the expected/estimated consumption, in addition to the x degree Celsius. The seat heating may have a plurality of power states, and the power states may be another example of input for determining the expected/estimated consumption associated with power.

Step **703:** This step may correspond to step **102** in **FIG. 2****.** The processing circuitry **802** determines an estimated total power consumption for all active power consumers **3** by summing the expected consumption associated with power for each active power consumer **3,** i.e. the expected consumption from step **702.** The estimated total power consumption may be for the period of time, it may be an average value, a mean value or it may be for at least one time instance.

Step **704:** The processing circuitry **802** may compare the estimated total power consumption with a maximum allowed total power consumption. Information indicating the maximum allowed total power consumption may be previously obtained or determined by the processing circuitry **802** in any suitable way, for example obtained by receiving the information from an offboard unit, from another processing circuitry, from another vehicle, from a fleet management system, etc.

The maximum allowed power consumption may be an adaptive value, an adaptive threshold value, an adaptive criterion etc.. The maximum allowed power consumption may be, for example the maximum allowed power consumption for vehicle **1** in total, it may be a maximum allowed power consumption for a common fuse, it may be a maximum allowed power consumption for a certain power generator **8,** just to mention some examples.

Step **705:** The processing circuitry **802** may determine a priority ranking of each active power consumer **3.** The priority ranking may comprise a high priority ranking, a medium priority ranking and a low priority ranking. In other words, each active power consumer **3** is associated with a priority ranking. The priority ranking may be based on any suitable criteria or parameter such as for example safety criticality, function of the vehicle, time, predetermined priority, etc.

Step **706:** The processing circuitry **802** may, based on a result of the comparison, determine whether or not to take an action associated with at least one of the active power consumers **3.** The action may be determined to be taken for the active power consumer **3** having lowest priority ranking. The action may comprise for example to deactivate the power consumer **3,** to delay power delivery to the power consumer **3,** to reduce power delivery to the power consumer **3,** to perform error checking, just to mention some examples. The action may comprise generating error code, indicating an error in the system or a subsystem, it may be to deactivate at least one power consumer **3,** it may be to trigger a current limitation, e.g. setting the system in a reduced mode in which lower current is consumed. The action may be an automated action.

When the result of the comparison indicates no difference between the estimated total power consumption and the maximum allowed total power consumption or the difference does not fulfil at least one difference criterion, then it may be determined that no action **107a** should be taken for any active power consumer **3.**

Step **707:** The processing circuitry **802** may determine a state of charge of a battery **5** providing power to the active power consumers **3.** The state of charge may be determined by obtaining information indicating the state of charge from the battery **5,** from a battery sensor arranged to sense and determine state of charge, or from any other suitable entity.

Step **708:** The processing circuitry **802** may, based on the state of charge, determine whether or not to allow that at least one of the active power consumers **3** overconsumes power from the battery **5.**

When the state of charge indicates that the battery is charged so that it fulfils at least one charge threshold, then it may be determined that overconsumption is allowed **106b.**

When the state of charge indicates that the battery **5** is does not fulfil at least one charge threshold, then it may be determined that overconsumption is not allowed **105b.**

Overconsumption of power may comprise that more power is consumed than the power provided to the battery during at least one of driving and charging. The overconsumption may be allowed for a limited time. The overconsumption may not always be allowed. For certain systems e.g. classic ICE vehicles more overconsumption is typically allowed. If there is a high Automotive Safety Integrity Level (ASIL), the requirements on power from battery **5** may be higher and thus overconsumption may not be allowed to the same extent. For e.g. critical low power consumers 3, then overconsumption may not be as accepted and higher SOC in batteries are required. A critical low power consumer may be for example an electrical steering servo, a computer for an autonomous vehicle etc.

Step **709:** The processing circuitry **802** may obtain information indicating a current measurement from a power generator **8** of the vehicle **1.** The current measurement may be over the period of time, it may be an average value, a mean value or it may be for at least one time instance.

The current measurement may be obtained from at least one of the power generator **8** and a battery **5** comprised in the vehicle **1.** The current measurement may be obtained from at least one of the power generator **8** and a battery **5** directly, or from a current sensor associated with them.

Step **710:** The processing circuitry **802** may determine an actual total power consumption for all active power consumers **3** in the vehicle **1** based on the information indicating the current measurement. The actual total power consumption may be for the period of time, it may be an average value, a mean value or it may be for at least one time instance. The actual total power consumption may be the same as indicated by the current measurement.

Step **711:** The processing circuitry **802** may compare the actual total power consumption with the estimated total power consumption.

Step **712:** The processing circuitry **802** may, based on a result of the comparison, determine whether or not at least one of the active power consumers **3** is functioning correctly.

When the result of the comparison indicates a difference between the actual total power consumption and the estimated total power consumption fulfils at least one difference criterion, then the processing circuitry **802** may be is configured to determine that at least one of the active power consumers **3** are not functioning correctly **108c.**

When the result of the comparison indicates no difference or a difference between the actual total power consumption and the estimated total power consumption does not fulfil a difference criterion, then the processing circuitry **802** may be configured to determine that the vehicle **1** is to maintain normal operating mode and/or that none of the at least one active power consumer **3** needs to be shut down.

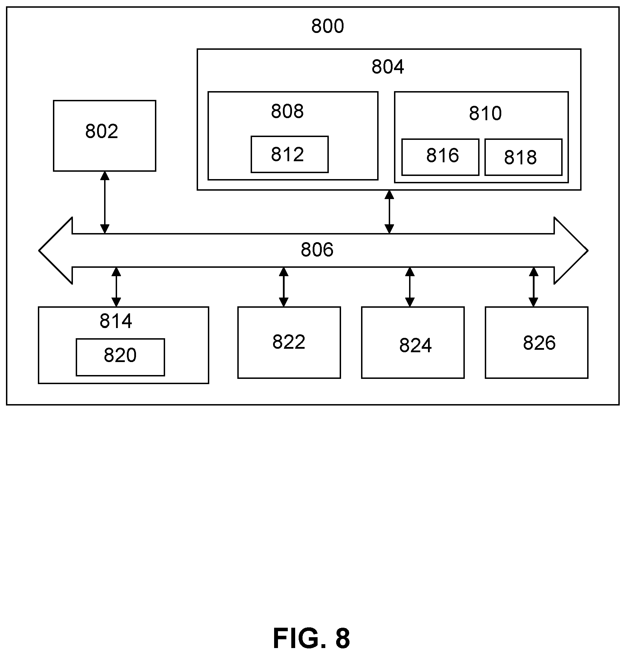

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of examples 1-20. Each example may be combined with any of the other examples discussed above.

Example 1: A computer system **800** for estimating power consumption in a vehicle **1,** the vehicle **1** comprising a plurality of power consumers **3,** the computer system **800** comprising processing circuitry **802** configured to:
- determine which of the plurality of power consumers **3** that are active;
- determine an expected consumption associated with power for each active power consumer **3**; and to
- determine an estimated total power consumption for all active power consumers **3** by summing the expected consumption associated with power for each active power consumer **3.**

Example 2: The computer system **800** of example 1, wherein the processing circuitry **802** is further configured to:
- compare the estimated total power consumption with a maximum allowed total power consumption; and to
- based on a result of the comparison, determine whether or not to take an action associated with at least one of the active power consumers **3.**

Example 3: The computer system **800** of example 2, wherein the processing circuitry **802** is further configured to
- determine a priority ranking of each active power consumer **3,** and
wherein the action is determined to be taken for the active power consumer **3** having lowest priority ranking.

Example 4: The computer system **800** of any of example 2-3, wherein when the result of the comparison indicates no difference between the estimated total power consumption and the maximum allowed total power consumption or the difference does not fulfil at least one difference criterion, then it is determined that no action **107a** should be taken for any active power consumer **3.**

Example 5: The computer system **800** of any of the preceding examples, wherein the processing circuitry **802** is further configured to:
- determine a state of charge of a battery **5** providing power to the active power consumers **3**; and to
- based on the state of charge, determine whether or not to allow that at least one of the active power consumers **3** overconsumes power from the battery **5.**

Example 6: The computer system **800** of example 5, wherein when the state of charge indicates that the battery **5** is charged so that it fulfils at least one charge criterion, then it is determined that overconsumption is allowed **106b,** and
wherein when the state of charge indicates that the battery **5** is charged so that it does not fulfil at least one charge criterion, then it is determined that overconsumption is not allowed **105b.**

Example 7: The computer system **800** of example 6, wherein the processing circuitry **802** is further configured to:
- obtain information indicating a current measurement from a power generator **8** of the vehicle **1;**
- determine an actual total power consumption for all active power consumers **3** in the vehicle **1** based on the information indicating the current measurement;
- compare the actual total power consumption with the estimated total power consumption; and to
- based on a result of the comparison, determine whether or not at least one of the active power consumers **3** is functioning correctly.

Example 8: The computer system **800** of example 7, wherein, when the result of the comparison indicates:
- a difference between the actual total power consumption and the estimated total power consumption that fulfils at least one difference criterion,
then the processing circuitry is configured to determine that at least one of the active power consumers 3 are not functioning correctly **108c.**

Example 9: The computer system **800** of any of examples 7-8, wherein when the result of the comparison indicates:
- no difference or a difference between the actual total power consumption and the estimated total power consumption that does not fulfil at least one difference criterion,
then the processing circuitry **802** is configured to determine that the vehicle **1** is to maintain normal operating mode and/or that none of the at least one active power consumers **3** needs to be shut down.

Example 10: The computer system **800** of any of examples 7-9, wherein the current measurement is obtained from at least one of the power generator **8** and a battery **5** comprised in the vehicle **1.**

Example 11: The computer system **800** of any of the preceding examples, wherein the expected consumption associated with power for each active power consumer **3** comprises a minimum expected consumption and a maximum expected consumption.

Example 12: A vehicle **1** comprising the computer system **800** of any of examples 1-11 and a plurality of power consumers **3.**

Example 13. A computer-implemented method for estimating power consumption in a vehicle **1,** the vehicle **1** comprising a plurality of power consumers **3,** the method comprising:
- determining **100, 701,** by a processing circuitry **802** of a computer system **800,** which of the plurality of power consumers **3** that are active;
- determining **101_1,...101_n ,702,** by the processing circuitry **802,** an expected consumption associated with power for each active power consumer **3;** and
- determining **102, 703,** by the processing circuitry **802,** an estimated total power consumption for all active power consumers **3** by summing the expected consumption associated with power for each active power consumer **3.**

Example 14: The method of example 13, further comprising:
- comparing, by the processing circuitry **802,** the estimated total power consumption with a maximum allowed total power consumption; and
- based on a result of the comparison, determining, by the processing circuitry **802,** whether or not to take an action associated with at least one of the active power consumers **3.**

Example 15: The method of example 14, further comprising:
- determining, by the processing circuitry **802,** a priority ranking of each active power consumer **3,** and
wherein the action is determined to be taken for the active power consumer **3** having lowest priority ranking.

Example 16: The method of any of examples 14-15, wherein when the result of the comparison indicates no difference between the estimated total power consumption and the maximum allowed total power consumption or the difference does not fulfil at least one difference criterion, then it is determined that no action **107a** should be taken for any active power consumer **3.**

Example 17: The method of any of the preceding examples, further comprising:
- determining, by the processing circuitry **802,** a state of charge of a battery **5** providing power to the active power consumers **3;** and
- based on the state of charge, determining, by the processing circuitry **802,** whether or not to allow that at least one of the active power consumers **3** overconsumes power from the battery **5.**

Example 18: The method of example 17, wherein when the state of charge indicates that the battery **5** is charged so that it fulfils at least one charge criterion, then it is determined that overconsumption is allowed **106b,** and
wherein when the state of charge indicates that the battery **5** is charged so that it does not fulfil at least one charge criterion, then it is determined that overconsumption is not allowed 105b.

Example 19: The method of example 18, further comprising:
- obtaining, by the processing circuitry **802,** information indicating a current measurement from a power generator **8** of the vehicle **1;**
- determining, by the processing circuitry **802,** an actual total power consumption for all active power consumers **3** in the vehicle **1** based on the information indicating the current measurement;
- comparing, by the processing circuitry **802,** the actual total power consumption with the estimated total power consumption; and
- based on a result of the comparison, determining, by the processing circuitry **802,** whether or not at least one of the active power consumers **3** is functioning correctly.

Example 20: The method of example 19, wherein, when the result of the comparison indicates a difference between the actual total power consumption and the estimated total power consumption fulfils at least one difference criterion, then it is determined that at least one of the active power consumers **3** are not functioning correctly 108c.

Example 21: The method of any of examples 19-20, wherein when the result of the comparison indicates no difference or a difference between the actual total power consumption and the estimated total power consumption does not fulfil at least one difference criterion, then it is determined that the vehicle **1** is to maintain normal operating mode and/or that none of the at least one active power consumers **3** needs to be shut down.

Example 22: The method of any of examples 7-9, wherein the current measurement is obtained from at least one of the power generator **8** and a battery **5** comprised in the vehicle 1.

Example 23: The method of any of the preceding examples, wherein the expected consumption associated with power for each active power consumer **3** comprises a minimum expected consumption and a maximum expected consumption.

Example 24: A computer program product comprising program code for performing, when executed by a processing circuitry **802,** the method of any of examples 13-23.

Example 25: A non-transitory computer-readable storage medium comprising instructions, which when executed by the processing circuitry **802,** cause the processing circuitry **802** to perform the method of any of examples 13-23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) for estimating power consumption in a vehicle (1), the vehicle (1) comprising a plurality of power consumers (3), the computer system (800) comprising processing circuitry (802) configured to:
determine which of the plurality of power consumers (3) that are active;
determine an expected consumption associated with power for each active power consumer (3); and to
determine an estimated total power consumption for all active power consumers (3) by summing the expected consumption associated with power for each active power consumer (3).

2. The computer system (800) of claim 1, wherein the processing circuitry (802) is further configured to:
compare the estimated total power consumption with a maximum allowed total power consumption; and to
based on a result of the comparison, determine whether or not to take an action associated with at least one of the active power consumers (3).

3. The computer system (800) of claim 2, wherein the processing circuitry (802) is further configured to:
determine a priority ranking of each active power consumer (3), and
wherein the action is determined to be taken for the active power consumer (3) having lowest priority ranking.

4. The computer system (800) of any of claims 2-3, wherein when the result of the comparison indicates no difference between the estimated total power consumption and the maximum allowed total power consumption or the difference fulfils at least one difference criterion, then it is determined that no action (107a) should be taken for any active power consumer (3).

5. The computer system (800) of any of the preceding claims, wherein the processing circuitry (802) is further configured to:
determine a state of charge of a battery (5) providing power to the active power consumers (3); and to
based on the state of charge, determine whether or not to allow that at least one of the active power consumers (3) overconsumes power from the battery (5).

6. The computer system (800) of claim 5,
wherein when the state of charge indicates that the battery (5) is charged to a level that fulfills at least one charge criterion, then it is determined that overconsumption is allowed (106b), and
wherein when the state of charge indicates that the battery (4) is charged to a level that does not fulfill the at least one charge criterion, then it is determined that overconsumption is not allowed (105b).

7. The computer system (800) of claim 6, wherein the processing circuitry (802) is further configured to:
obtain information indicating a current measurement from a power generator (8) of the vehicle (1);
determine an actual total power consumption for all active power consumers (3) in the vehicle (1) based on the information indicating the current measurement;
compare the actual total power consumption with the estimated total power consumption; and to
based on a result of the comparison, *determine* whether or not at least one of the active power consumers (3) is functioning correctly.

8. The computer system (800) of claim 7, wherein, when the result of the comparison indicates a difference between the actual total power consumption and the estimated total power consumption that fulfills at least one difference criterion, then the processing circuitry is configured to determine that at least one of the active power consumers (3) are not functioning correctly (108c).

9. The computer system (800) of any of claims 7-8, wherein when the result of the comparison indicates no difference or a difference between the actual total power consumption and the estimated total power consumption that does not fulfill at least one difference criterion, then the processing circuitry (802) is configured to determine that the vehicle (1) is to maintain normal operating mode and/or that none of the at least one active power consumers (3) needs to be shut down.

10. The computer system (800) of any of claims 7-9, wherein the current measurement is obtained from at least one of the power generator (8) and a battery (5) comprised in the vehicle (1).

11. The computer system (800) of any of the preceding claims, wherein the expected consumption associated with power for each active power consumer (3) comprises a minimum expected consumption and a maximum expected consumption.

12. A vehicle (1) comprising the computer system (800) of any of claims 1-11 and a plurality of power consumers (3).

13. A computer-implemented method for estimating power consumption in a vehicle (1), the vehicle (1) comprising a plurality of power consumers (3), the method comprising:
*determining* (100, 701), by a processing circuitry (802) of a computer system (800), which of the plurality of power consumers (3) that are active;
*determining* (101_1,... 101_n ,702), by the processing circuitry (802), an expected consumption associated with power for each active power consumer (3); and
*determining* (102, 703), by the processing circuitry (802), an estimated total power consumption for all active power consumers (3) by summing the expected consumption associated with power for each active power consumer (3).

14. A computer program product comprising program code for performing, when executed by a processing circuitry (802), the method of claims 13.

15. A non-transitory computer-readable storage medium comprising instructions, which when executed by the processing circuitry (802), cause the processing circuitry (802) to perform the method of claim 13.
